# EUROPEAN PATENT APPLICATION

(11) **EP 4 545 930 A1**
(43) Date of publication of application: **30.04.2025**
(21) Application number: 23829412.8
(22) Date of filing: 17.02.2023
(51) Int. Cl.: G01N 1/28, G01N 1/44

(54) **DIGITIZING DEVICE AND METHOD FOR LIQUID SAMPLE**

(30) Priority: 27.06.2022 CN 202210741871
(71) Applicant: Beijing Ability Technology Co., Ltd., Beijing 100081 (CN)
(72) Inventor: LIU, Jixin, Beijing 100081 (CN); NA, Xing, Beijing 100081 (CN)
(74) Representative: De Ros, Alberto
(86) International application number: PCT/CN2023/076658
(87) International publication number: WO 2024/001219

(57) **Abstract**

The present application provides a digitizing device and method for a liquid sample. The device comprises: a container provided with at least one digitizing channel for accommodating a liquid sample, the diameter size of the digitizing channel being less than or equal to a preset value to limit diffusion of the digitized liquid sample in the digitizing channel; and a heating assembly at least partially heating the digitizing channel, the heating temperature of the heating assembly being not lower than the cloud point temperature of the liquid sample. According to the technical solution of the present application, after liquid to be digitized is filled into the digitizing channel of a preset size, the digitizing channel is heated at a temperature higher than the cloud point temperature of the liquid sample, so that the digital processing of the liquid sample to be digitized can be realized, and compared with the prior art, the present application is simple and convenient in overall operation, the container, the heating assembly and the like used are conventional instruments with relatively low prices, and the digitizing operation of the liquid sample can be realized in a short time.

## Description

### Cross-reference to related application

The present application claims priority to Chinese Patent Application No. 202210741871.3, entitled "DIGITIZING DEVICE AND METHOD FOR LIQUID SAMPLE", and filed on June 27, 2022, the entire disclosure of which is incorporated herein by reference in its entirety.

### Technical Field

The present application relates to the technical field of sample and reagent handling, and in particular to a device and a method for digitizing a liquid sample.

### Background Art

Digitization of liquids is the distribution and analysis of liquids and entities (e.g., particles, microorganisms, cells, molecules and the like) therein. In the process of liquid digitization, a crucial role is played by spatial distributing techniques, which are used to distribute entities in a solution or suspension into different subunits. Currently, the main digitizing techniques commonly used in digitization of liquid are microcavity technology and micro-droplet technology.

The microcavity technology is based on an integrated fluidic pathway chip and relies on microstructures on the chip to divide the liquid into separate tiny droplet units. However, when microcavity technology is used for digitizing operation, the operation is time-consuming, the reaction cost is high, and the structure of the equipment used to realize the digitizing operation is complicated.

Micro-droplet technology is based on the principle of water-in-oil, and it utilizes shear force to disperse the liquid into the immiscible oil phase, thereby forming water-in-oil micro-droplets. However, the use of micro-droplet technology for digitizing operations requires the use of a great deal of oil phases and surfactants, which is costly.

Overall, the current digitizing equipment used for realizing the digitization of liquid is complicated in structure, and the equipment cost and process cost are high.

### Summary

The present application provides a device and a method for digitizing a liquid sample, which are used to remove the defects of complicated digitizing operation, time-consuming, and high reaction cost in the prior art, and to realize digitization of a liquid sample with simple operation, low cost, and short time.

The present application provides a device for digitizing a liquid sample, the device comprises:
a container provided with at least one digitizing channel for accommodating a liquid sample, the size of the digitizing channel being less than or equal to a preset value to limit diffusion of the digitized liquid sample in the digitizing channel; and
a heating assembly at least partially heating the digitizing channel, the heating temperature of the heating assembly being not lower than the cloud point temperature of the liquid sample.

According to the device for digitizing a liquid sample provided in the present application, the digitizing channel comprises, in an extended direction, at least one low-temperature zone and at least one high-temperature zone, the heating assembly is provided in each of the high-temperature zones, and the high-temperature zones are arranged alternately with the low-temperature zones.

According to the device for digitizing a liquid sample provided in the present application, each of the low-temperature zone is provided with a cooling assembly.

According to the device for digitizing a liquid sample provided in the present application, the container comprises a microchannel chip, and a microchannel of the microchannel chip forms the digitizing channel.

According to the device for digitizing a liquid sample provided in the present application, the heating assembly is a laser source or a thermal light source, and the heating assembly is located on the side of the microchannel chip where the microchannel is provided.

According to the device for digitizing a liquid sample provided in the present application, the device further comprises:
a light-shielding plate, which is disposed on the side of the microchannel chip where a phase-separating channel is provided, and disposed between the microchannel chip and the heating assembly; and
a light-transmitting slot, which is provided in the light-shielding plate and provided in correspondence with the digitizing channel.

According to the device for digitizing a liquid sample provided in the present application, the cooling assembly is a water cooling box or a cooling substrate.

According to the device for digitizing a liquid sample provided in the present application, the container comprises a microchannel tube, and the pathway of the microchannel tube forms the digitizing channel; and
the heating assembly is an electric heater plate, and the electric heater plate being provided in a high temperature zone of the digitizing channel.

According to the device for digitizing a liquid sample provided in the present application, the container comprises a capillary coil, and the pathway of the capillary coil forms the digitizing channel;
the heating assembly is an electric heater bracket, the capillary coil is mounted on the electric heater bracket, and contact position of the electric heater bracket with the capillary coil is the high temperature zone of the digitizing channel.

The present application also provides a method of digitizing a liquid sample, based on the device for digitizing a liquid sample described above, the method comprises:
filling the liquid sample into a digitizing channel of a preset size of the container;
heating different locations of the digitizing channel of the container using the heating assembly until a plurality of separated spaces with alternating aqueous and micellar phases appear within the digitizing channel,
wherein the liquid sample is a colloidal solution exceeding the critical micelle concentration, and the heating assembly runs at a heating temperature not lower than the cloud point temperature of the liquid sample.

The present application provides a device and a method for digitizing a liquid sample. With the present invention, digitization of a liquid sample to be digitized can be realized by filling the liquid sample to be digitized into a digitizing channel of a preset size, and then heating the digitizing channel at a temperature exceeding the cloud point of the liquid sample. Compared to the prior art, the present application allows digitization to be carried out directly in a container, the overall operation is simple, and the container, the heating assembly and the like used in the present application belong to conventional instruments with relatively low price, and the digitizing operation of the liquid sample to be digitized can be realized in a relatively short period of time.

### Brief Description of the Drawings

In order to more clearly illustrate the technical solutions in the present application or the prior art, the accompanying drawings that need to be used in the description of the Examples or the prior art will be briefly introduced below, and it will be obvious that the accompanying drawings in the following description are some Examples of the present application, and that other accompanying drawings can be obtained based on these drawings for a person skilled in the art without creative work.
Figure 1 is one of the schematic diagrams for digitizing principle of the device for digitizing a liquid sample provided by the present application;
Figure 2 is one of the schematic diagrams for digitizing principle of the device for digitizing a liquid sample provided by the present application;
Figure 3 is a schematic diagram for digitization of a liquid sample in a container of a preset size provided by the present application;
Figure 4 is a schematic diagram for a structure of the device for digitizing a liquid sample provided in Example 1 of the present application;
Figure 5 is a schematic diagram for a structure of the device for digitizing a liquid sample provided in Example 2 of the present application;
Figure 6 is a schematic diagram for another structure of the device for digitizing a liquid sample provided in Example 2 of the present application;
Figure 7 is a schematic diagram for another structure of a device for digitizing a liquid sample provided in Example 2 of the present application;
Figure 8 is a schematic diagram for a structure of the device for digitizing a liquid sample provided in Example 3 of the present application;
Figure 9 is a schematic diagram for another structure of the device for digitizing a liquid sample provided in Example 3 of the present application;
Figure 10 is a schematic diagram for a structure of a device for digitizing a liquid sample provided in Example 4 of the present application;
Figure 11 is a schematic flow diagram of a method for digitizing a liquid sample provided by the present application.

### The reference signs:

11: micellar phase micro-droplets ; 12: aqueous phase; 21: aqueous phase; 22: micellar phase; 31: small-size container; 32: aqueous phase micro-droplets; 33: micellar phase micro-droplets; 41: fan; 42: aqueous phase; 43: micellar phase; 44: microchannel tube; 45: electric heater plate; 51: light source; 52: schematic light rays; 53: mask; 54: mask slot hole; 55: microchannel chip; 56: cooling system; 61: mask with transparent effect; 62: microchannel; 71: schematic light rays; 72: micellar phase; 73: transparentized schematic mask; 74: aqueous phase; 81: capillary coil; 82: heater bracket; 83: fan; 84: fan cooling airflow; 91: micellar phase; 92: aqueous phase; 101: laser source; 102: Galvo scanning lens; 103: laser beam; 104: microchannel chip quartz cover; 105: micellar phase; 106: aqueous phase; 107: microchannel chip; 108: thermostatic water cooling box.

### Specific Modes for Carrying Out the Embodiments

In order to make the objects, technical solutions and advantages of the present application clearer, the technical solutions in the present application will be described clearly and completely below in conjunction with the accompanying drawings in the present application, and it is obvious that the described Examples are a part of the Examples in the present application rather than all of the Examples. Based on the Examples provided in the present application, all other Examples obtainable by a person skilled in the art without creative work fall within the protection scope of the present application.

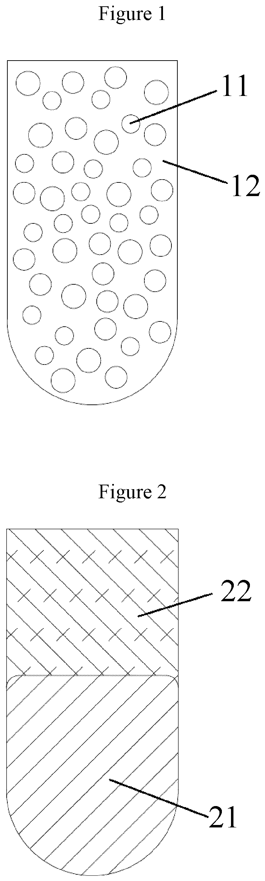

A device for digitizing a liquid sample of the present application is described below in combination with Figures 1-10.

Nonionic surfactants are surfactants whose molecules contain ether groups that do not dissociate in aqueous solution as the main hydrophilic group, and whose surface activity is embodied by neutral molecules. Nonionic surfactants have high surface activity, good properties of solubilization, washing, static electricity resistance, calcium soap dispersion and other properties, low irritation, as well as excellent wetting and washing function. It can be applied in a wider pH range than general ionic surfactants, and can also be used together with other ionic surfactants. Adding a small amount of nonionic surfactant to ionic surfactants can increase the surface activity of the system. Nonionic surfactants can be classified into polyoxyethylene type, polyol type, alkanol amide type, polyether type, oxidized amine type and so on according to the structure of hydrophilic group.

A clear homogeneous nonionic surfactant solution (the nonionic surfactant can be of polyoxyethylene type, polyol type, polyether type, oxidized amine type and the like, or mixtures containing these surfactants) will spontaneously form two mutually incompatible phases, a micellar phase and an aqueous phase with a lower concentration of the surfactant, due to the reduction of the solubility caused by the change of temperature or other conditions, and the temperature threshold at which the phase separation starts to occur is called the cloud point, and the phase separation process is a reversible physical change. It is generally believed that this phenomenon is caused by the growth and structural change of micelles, micelles connecting into a network, and the action of H-bonds between water molecules and micelles.

As shown in Figure 1, during the digitization process accomplished in a macroscopic container, micellar phase micro-droplets 11 and aqueous phase 12 are formed first, which is manifested superficially by the occurrence of turbidity in the solution.

As shown in Figure 2, thereafter, due to the action of diffusion, the micelle phase micro-droplets 11 gradually aggregate, eventually form two separate clear macroscopic phases - aqueous phase 21 and micelle phase 22.

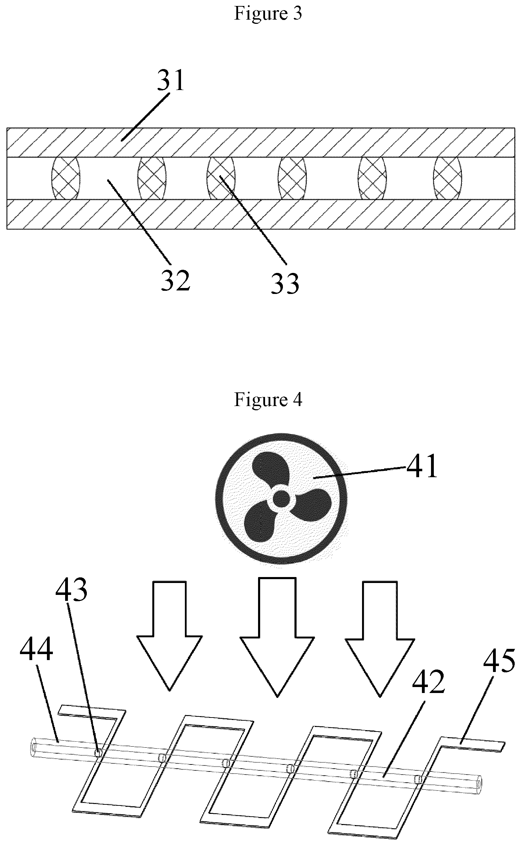

As shown in Figure 3, the present application transfers the digitization process to a small-size container 31, the small-size container may be a capillary, or a microchannel, with at least one dimension of < 1 mm in its dimensions. When the temperature reaches the cloud point to start digitization, the formed aqueous phase micro-droplets 32 and micellar phase micro-droplets 33 are difficult to aggregate due to obstruction of the diffusion in this small-size container, and multiple separate micellar phase zones and aqueous phase zones will be formed in the small-size container, thereby achieving uniform separation of the aqueous phase, also known as the digitization process. This digitization method is short in time, cost-effective, simple, and significantly better than the two current methods for digitizing aqueous solutions. In addition, when the solution temperature is lowered, the micellar and aqueous phases are reversibly converted back to a single phase, which facilitates other subsequent operations.

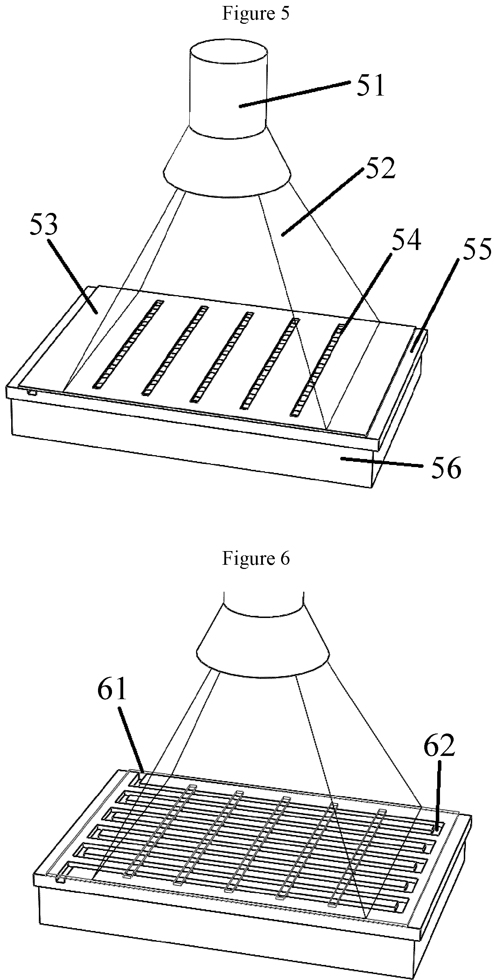

In order to regulate the digitization process of liquid sample, different temperature gradients can also be applied to the small-size container so that the micellar phase is generated only in the zone where the temperature is higher than the cloud point, which allows for better control of the digitization process. The high temperature portion of the temperature gradient can be realized by means of resistance heating selected zones, as shown in Figure 4, or light heating selected zones, as shown in Figure 5; and the low temperature portion of the temperature gradient may be realized by means of air-cooling, water-cooling, or diode-cooling.

Examples of the present application provide a device for digitizing a liquid sample, comprising: a container and a heating assembly. The container is provided with at least one digitizing channel for accommodating the liquid sample, and the digitizing channel has a size less than or equal to a preset value to limit the diffusion of the digitized liquid sample within the digitizing channel. The heating assembly at least partially heats the digitizing channel, and a heating temperature of the heating assembly is not lower than a cloud point temperature of the liquid sample. In some embodiment, the preset value may be in the range of greater than or equal to 1 micrometer and less than or equal to 1 millimeter. The present application can realize the digitization of the liquid sample to be digitized by filling the liquid sample to be digitized into the digitizing channel of a preset size, and then heating the digitizing channel at a temperature exceeding the cloud point of the liquid sample. Compared to the prior art, the present invention allows digitization to be carried out directly in a container, the overall operation is simple, and the container and heating assembly used belong to relatively low-priced conventional instruments, and the present invention can realize the digitizing operation of the liquid sample to be digitized in a relatively short period of time.

In the present application, the liquid sample is a colloidal solution exceeding a critical micelle concentration (CMC), which is defined as one of the most important physical quantities characterizing the structure and performance of the surfactant, and according to the size of the CMC value of the surfactant, it is possible to design the amount of the surfactant to be added in order to obtain a solution with controllable micelle size and shape. The lowest concentration of surfactant required for the formation of micelles is called the critical micelle concentration.

Cloud point is a characteristic constant of nonionic surfactants, which is influenced by the molecular structure of surfactants and coexisting substances. **In** the surfactant aqueous solution, with the rise in temperature, a turbid phenomenon will appear, surfactant transforms from completely dissolved state to partially dissolved state, the temperature when the transformation occurs is the cloud point temperature. The cloud point is the temperature at which phase separation occurs in a homogeneous micellar solution of a nonionic surfactant.

In the device for digitizing a liquid sample of the present application, in order to better realize the digitization of the liquid sample, the digitizing channel comprises, in an extended direction, at least one low-temperature zone and at least one high-temperature zone, the heating assembly is provided in each of the high-temperature zones, and the high-temperature zones are arranged alternately with the low-temperature zones. Specifically, a cooling assembly is provided in each of the low-temperature zones. By providing the cooling assembly, the temperature of other positions in the digitizing channel can be generally guaranteed to remain unchanged except for that the temperature of the high-temperature zones heated by the heating assembly increases, so that the liquid sample can be digitized in the preset high-temperature zone without spreading to other positions in the digitizing channel.

Optionally, in the present application, the cooling component is a water-cooling box, a cooling substrate, a fan, or other device that have a cooling effect, and the cooling substrate is a semiconductor cooler.

As shown in Figure 4, the container further comprises a microchannel tube, and the channel of the microchannel tube forms the digitizing channel, enabling the solution sample to fill the channel of the microchannel tube.

Specifically, as shown in Figure 4, in an Example of the present application, the heating assembly is an electric heater plate 45, the liquid sample is filled in the microchannel tube 44, the channel of the microchannel tube 44 forms a digitizing channel, the electric heater plate 45 is arranged in the high temperature zone of the digitizing channel, and the part where the electric heater plate 45 is in contact with the microchannel tube 44 is the high temperature zone of the microchannel tube 44, and the electric heater plate 45 heats up the liquid sample located in the microchannel tube 44 to increase the temperature to the cloud point temperature, thereby separating into aqueous phase 42 and micellar phase 43. A fan 41 is also configured to air-cool the low-temperature zone of the microchannel tube by rotating the air supply.

As shown in Figures 5-7, the container in the present application includes a microchannel chip, and the microchannel of the microchannel chip form a digitizing channel. The heating assembly is a laser source or a thermal light source, and the heating assembly is located on the side of the microchannel chip where a microchannel is provided, to heat the high temperature zone of the digitizing channel.

The device for digitizing a liquid sample further comprises: a light-shielding plate, which is disposed on the side of the microchannel chip where a digitizing channel is provided, and disposed between the microchannel chip and the heating assembly. The light-shielding plate is provided with a light-transmitting slot, and the light-transmitting slot is provided in correspondence with the digitizing channel, so that light from a thermal light source is irradiated through the light-transmitting slot to the high temperature zone of the digitizing channel.

The microchannel chip includes a plurality of microchannels, and the diameter of the microchannels is not larger than one millimeter, which can achieve the technical effect of preventing diffusion of the digitized liquid sample in the digitizing channel.

Specifically, as shown in Figures 5, 6 and 7, in another Example of the present application, the heating assembly in this Example is a thermal light source 51, as shown by the schematic light rays 52 in the figure. The container comprises a microchannel chip 55, and the microchannel 62 of the microchannel chip 55 form a digitizing channel. The thermal light source 51 is located on the side of the microchannel chip 55 where the microchannel 62 is provided. The light-shielding plate is a mask 53, the mask 53 is disposed on the side of the microchannel chip 55 where the digitized channel is provided, and disposed between the microchannel chip 55 and the thermal light source 51. The mask 53 is provided with a mask slot hole 54, and the mask slot hole 54 is provided in correspondence with the digitizing channel.

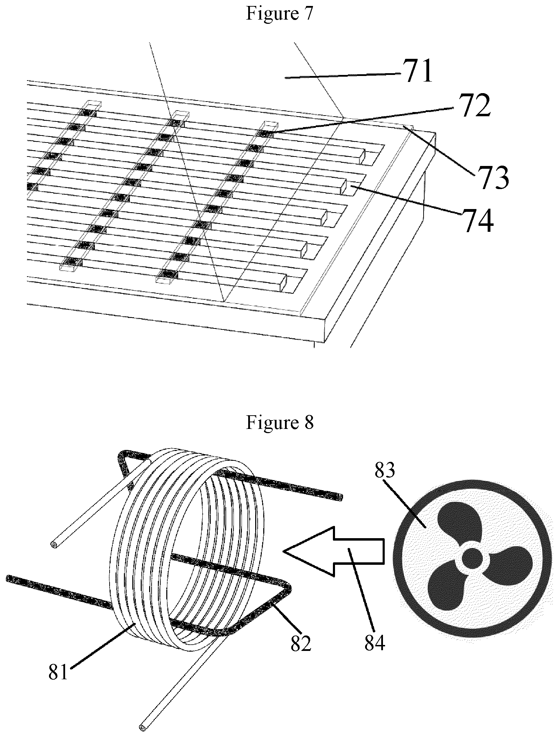

The microchannel chip 55 is provided on the cooling system 56, the mask with transparent effect 61, the transparentized schematic mask 73, and schematic light rays 71 are shown in Figures 6 and 7. In this Example, the thermal light source 51 irradiates the thermal light through the mask slot hole 54 to different positions of the microchannel 62 of the microchannel chip 55, and the different positions are heated up due to being irradiated with the light, and constitute the high temperature portion of the digitizing channel, and when the temperature rises to the cloud point temperature of the liquid sample, the liquid sample begins to undergo digitization and is divided into a micellar phase 72 and a water phase 74.

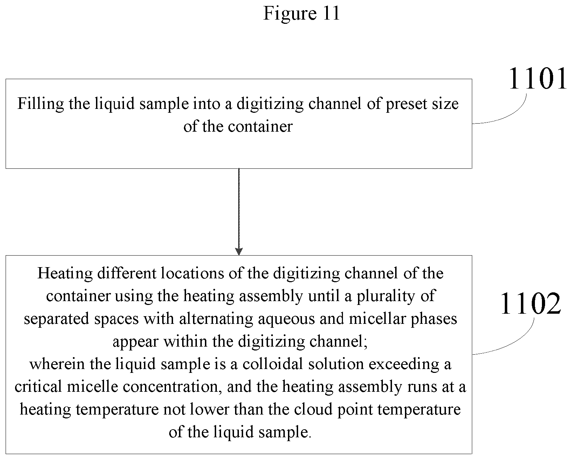

As shown in Figure 11, by applying the device for digitizing a liquid sample provided in the Examples of the present application, the present application also provides a method for digitizing a liquid sample, the method comprises the following steps:
1101, filling the liquid sample into the digitizing channel of a preset size of the container; specifically, a preset amount of solute and solution are placed in a centrifuge to be centrifuged and mixed at a speed of 3000 G for 5 minutes to obtain the liquid sample.
1102, heating different positions of the digitizing channel of the container using the heating assembly until a plurality of separated spaces with alternating aqueous phase and micellar phase appear within the digitizing channel.

The liquid sample is a colloidal solution exceeding a critical micelle concentration, and the heating assembly is heated at a temperature not lower than the cloud point temperature of the liquid sample. The present invention proposes a new method for digitizing liquids, namely a new method for digitizing liquid samples, by utilizing the phenomenon that a colloidal solution exceeding a critical micelle concentration generates turbidity when it is heated above the cloud point, and heating the colloidal solution in a small-size channel, which causes the colloidal solution to spontaneously separate into two phases, and due to the obstruction of diffusion in the small-size tube, the separated two phases will appear alternately, thus separating the aqueous phase into homogeneous micro-droplets to achieve digitization of the aqueous solution.

Specifically, the specific operation of digitizing a liquid sample using the device for digitizing a liquid sample as shown in Figures 5, 6, and 7 includes: 1 g of Triton X-114 was vortexed and mixed with 5 ml of cool water sufficiently, the resultant was centrifuged on a centrifuge at 3000 G for 5 minutes, and then the resulted mixed solution was filled into a microchannel chip 55. The microchannel chip 55 was placed on a diode-cooled copper thermally-conductive substrate with the substrate temperature being controlled at 5-10 °C. On the microchannel chip 55, there was a slotted tin foil mask 53 covering the microchannel chip 55, and the chip mask 53 was irradiated using a high power thermal light source 51 with visible to infrared wavelength band from the above of the microchannel chip 55, and part of the light is irradiated through the mask slot holes 54 to the microchannel zone of the chip and causes the temperature of the solution in the microchannel to increase, and when the temperature of irradiated zones of the channel reaches 22°C, the micellar phases 72 were formed in these zones of the channel, and the channel was separated into a plurality of separated sections with alternating aqueous phase 74 and micellar phase 72.

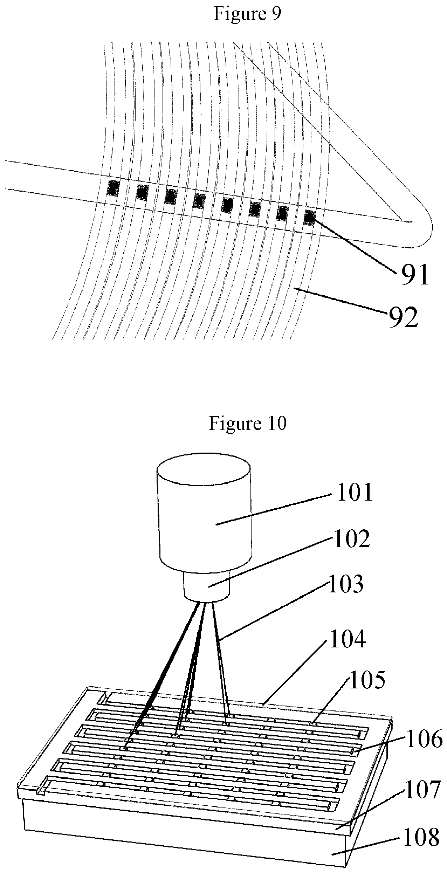

As shown in Figures 8 and 9, the container further comprises a capillary coil, the channel of the capillary coil forms a digitizing channel, and the liquid sample is filled into the channel formed by the capillary coil.

Meanwhile, the heating assembly is an electric heating bracket, the capillary coil is mounted on the electric heating bracket, and the contact position of the electric heating bracket with the capillary coil is a high temperature zone of the digitizing channel, and the temperature of the heating bracket is controlled so as to make the temperature of the high temperature zone reach the cloud point temperature.

Specifically, as shown in Figures 8 and 9, in another Example of the present application, the heating assembly is a heating bracket 82, and the heating bracket 82 begins to heat when it is energized. The container includes a capillary coil 81, and the channel of the capillary coil 81 forms a digitizing channel. The capillary coil 81 is mounted on the electric heating bracket 82, and the contact position between the electric heating bracket 82 and the capillary coil 81 is a high temperature zone of the digitizing channel.

In an Example of the present application, the cooling component is a fan 83, as shown in Figure 8, it is a fan cooling airflow 84, and the fan cooling airflow 84 is blown toward the capillary coil 81, cooperating with the heating bracket 82 to form a temperature gradient of a high-temperature zone and a low-temperature zone in the digitizing channel. The heating bracket 82 is energized to heat different positions of the digitizing channel of the capillary coil 81, and after the temperature at the different positions rises to the cloud point temperature of the liquid sample, the liquid sample begins to undergo digitization and is separated into a micellar phase 91 and a water phase 92.

Specifically, the specific operation of digitizing a liquid sample using the device for digitizing a liquid sample as shown in Figures 8 and 9 includes: 1 g of polysorbate 80 was vortexed and mixed with 5 ml of water sufficiently, the resultant was centrifuged on a centrifuge at 3000 G for 5 minutes, and then the resulted mixed solution was filled into a quartz capillary coil 81. The quartz capillary coil was supported by a heater bracket 82, and a fan 83 may cool the entire quartz capillary coil. When the heater bracket 82 was energized, the bracket generated heat to heat the quartz capillary coil in contact with the bracket, and then the fan 83 blew air onto the whole quartz capillary coil 81 to keep the temperature of the whole coil constant. The heating power of the bracket and the air volume of fan were controlled, so that the temperatures of the quartz capillary coil and direct contact positions increased, while the temperature of the other positions of the coil kept constant. When the temperatures of the quartz capillary coil and direct contact positions reached 95 °C, the micellar phase 91 was generated at the positions of the quartz capillary tube where the temperature was raised. A plurality of separated sections with alternating micellar phase and water phase were regularly generated throughout the whole quartz capillary channel.

As shown in Figure 10, in another Example of the present application, the heating assembly is a laser source 101, on which a Galvo scanning lens 102 is provided, and a laser beam 103 for heating is emitted from the laser source 101.

The container comprises a microchannel chip 107, and the microchannel of the microchannel chip 107 forms a digitizing channel. The laser source 101 is located on the side of the microchannel chip 107 where the microchannel is provided. The microchannel chip 107 is covered with a microchannel chip quartz cover 104, and the microchannel chip 107 is provided in a thermostatic water cooling box 108. In this Example, the laser source 101 is modulated such that the laser beam 103 emitted from the Galvo scanning lens is irradiated at different positions of the microchannel of the microchannel chip 107, and the different positions are heated up due to being irradiated by the laser beam 103, and constitute high temperature portions of the digitizing channel, and when the temperature rises to the cloud point temperature of the liquid sample, the liquid sample begins to undergo digitization and is separate into a micellar phase 105 and a water phase 106.

Specifically, the specific operation of digitizing a liquid sample using the device for digitizing a liquid sample as shown in Figure 10 includes: 1 g of hydrogenated castor oil polyoxyethylene ether EL-30 was vortexed and mixed with 5 ml of water sufficiently, the resultant was centrifuged on a centrifuge at 3000 G for 5 minutes, and then the resulted mixed solution was filled into a microchannel chip 107. Above the microchannel chip, there was a quartz cover plate. The microchannel chip was placed on a circulating water-cooled thermostatic substrate of 25°C or a thermostatic water-cooled box 108. Above the microchannel chip, there was a laser system configured with a Galvo scanning lens 102 to irradiate any point, line, or surface on the chip and produce thermal effect. When the laser power was adjusted to irradiate a specific location on the microchannel on the chip, the laser beam 103 irradiated the microchannel chip quartz cover 104 so that the cover plate is heated, the use of different quartz cover plates or the use of the lasers of different wavelengths allows for direct heating of the solution in the channel through the cover plate, and when the temperatures of the solution in the irradiated zones of the channel reaches 95 °C, the micellar phase was formed in these zones of the channel, and the channel was separated into a plurality of separated sections with alternating water phase and micellar phase.

The present application proposes a new method for digitizing liquids, namely a new method for digitizing liquid samples, by utilizing the phenomenon that a colloidal solution exceeding a critical micelle concentration generates turbidity when it is heated above the cloud point, and heating the colloidal solution in a small-size channel, which causes the colloidal solution to spontaneously separate into two phases, which appear alternately due to the obstruction of the diffusion in the small-size channel, thus separating the aqueous phase into homogeneous micro-droplets to achieve digitization of the aqueous solution.

Finally, it should be noted that the above Examples are only used to illustrate the technical solutions of the present application, not to limit them; although the present application has been described in detail with reference to the foregoing Examples, a person skilled in the art should understand that he or she can still modify the technical solutions disclosed in the foregoing Examples or replace some of the technical features therein with the same; and such modifications or replacements do not make the corresponding technical solutions deviate from the spirit and scope of the technical solutions of the Examples of the present application.

## Claims

1. A device for digitizing a liquid sample, the device comprises:
a container provided with at least one digitizing channel for accommodating a liquid sample, the size of the digitizing channel being less than or equal to a preset value to limit diffusion of the digitized liquid sample in the digitizing channel; and
a heating assembly at least partially heating the digitizing channel, the heating temperature of the heating assembly being not lower than the cloud point temperature of the liquid sample.

2. The device for digitizing a liquid sample of claim 1, wherein
the digitizing channel comprises, in an extended direction, at least one low-temperature zone and at least one high-temperature zone, the heating assembly is provided in each of the high-temperature zones, and the high-temperature zones are arranged alternately with the low-temperature zones.

3. The device for digitizing a liquid sample of claim 2, wherein
each of the low-temperature zone is provided with a cooling assembly.

4. The device for digitizing a liquid sample of claim 3, wherein
the container comprises a microchannel chip, and a microchannel of the microchannel chip forms the digitizing channel.

5. The device for digitizing a liquid sample of claim 4, wherein
the heating assembly is a laser source or a thermal light source, and the heating assembly is located on the side of the microchannel chip where the microchannel is provided.

6. The device for digitizing a liquid sample of claim 5, wherein the device further comprises:
a light-shielding plate, which is disposed on the side of the microchannel chip where a phase-separating channel is provided, and disposed between the microchannel chip and the heating assembly; and
a light-transmitting slot, which is provided in the light-shielding plate, and provided in correspondence with the digitizing channel.

7. The device for digitizing a liquid sample of claim 3, wherein
the cooling assembly is a water cooling box or a cooling substrate.

8. The device for digitizing a liquid sample of claim 1, wherein
the container comprises a microchannel tube, and a channel of the microchannel tube forms the digitizing channel; and
the heating assembly is an electric heater plate, and the electric heater plate is provided in a high temperature zone of the digitizing channel.

9. The device for digitizing a liquid sample of claim 1, wherein
the container comprises a capillary coil, and a channel of the capillary coil forms the digitizing channel;
the heating assembly is an electric heater bracket, the capillary coil is mounted on the electric heater bracket, and the contact position of the electric heater bracket with the capillary coil is the high temperature zone of the digitizing channel.

10. A method for digitizing a liquid sample, based on the device for digitizing a liquid sample of any one of claims 1 to 9, the method comprises:
filling the liquid sample into a digitizing channel of a preset size of the container;
heating different locations of the digitizing channel of the container using the heating assembly until a plurality of separated spaces with alternating aqueous and micellar phases appear within the digitizing channel,
wherein the liquid sample is a colloidal solution exceeding the critical micelle concentration, and the heating assembly runs at a heating temperature not lower than the cloud point temperature of the liquid sample.
